# FASCICULE DE BREVET EUROPEEN

(11) **EP 2 411 939 B1**
(45) Date de publication et mention de la délivrance du brevet: **16.09.2015**
(21) Numéro de dépôt: 10713721.8
(22) Date de dépôt: 23.03.2010
(51) Int. Cl.: G06K 7/00, H01Q 1/22

(54) **SYSTÈME ET PROCÉDÉ POUR LA LECTURE D'UN OU DE PLUSIEURS TAGS RFID DANS UNE CASSETTE MÉTALLIQUE AVEC UN PROTOCOLE ANTICOLLISION**
SYSTEM UND VERFAHREN ZUM LESEN EINES ODER MEHRERER RFID-ETIKETTE IN EINER METALLKASSETTE MIT EINEM ANTIKOLLISIONSPROTOKOLL
SYSTEM AND METHOD FOR READING ONE OR MORE RFID TAGS IN A METAL CASSETTE WITH AN ANTICOLLISION PROTOCOL

(30) Priorité: 23.03.2009 EP 09155915
(43) Date de publication de la demande: 01.02.2012
(73) Titulaire: SATYATEK SA, 1800 Vevey (CH)
(72) Inventeur: FROSCH, Reinhold, A-8075 Hart bei Graz (AT); ZIELASCH, Andreas, 82256 Fürstenfeldbruck (DE); GEHRIG, Nicolas, CH-1803 Chardonne (CH)
(74) Mandataire: Margotti, Herwig Franz
(86) Numéro de dépôt international: PCT/IB2010/051259
(87) Numéro de publication internationale: WO 2010/109412

(56) Documents cités:
- WO-A1-2008/031630
- WO-A1-2009/003231
- FR-A1- 2 890 227
- US-B1- 6 703 935

## Description

### DOMAINE DE l'INVENTION

La présente invention concerne une méthode et un appareil pour réaliser la détection de tags RFID (Identification par radio fréquence) dans une boîte métallique fermée.

Plus spécifiquement, la présente invention peut être utilisée pour identifier, inventorier, tracer, automatiquement et sans contact des objets marqués par un tag RFID, lesdits objets étant contenus dans une cassette (par exemple une cassette de stérilisation) et la cassette elle-même.

### ETAT DE L'ART

Une grande variété de méthodes et de technologies existent pour identifier et traçer des informations propres à un objet (par exemple son numéro de série, son fabricant etc.). Actuellement, les solutions les plus utilisées sont l'identification par code datamatrix (un code optique en 2 dimensions appliqué par laser ou micropercussion sur la surface de l'objet marqué), par code-barres ou par marqueur (couramment appelé "tag") RFID.

Dans le cas de la technologie RFID, un circuit intégré (IC) est encapsulé dans une pastille en métal (tels que décrit par exemple dans le brevet FR2868939 (A1)), formant un tag, et la pastille est soudée ou collée sur les objets à marquer. Ces tags ne sont lisibles seulement au contact ou à une distance de quelques millimètres.

Ces techniques de marquage ne permettent donc pas l'automatisation des tâches et processus (notamment l'identification et la traçabilité des objets individuels) et requièrent une action humaine. Chaque objet doit être identifié, lu un par un, au moyen d'un lecteur optique ou RFID en fonction de la technologie de marquage utilisée. Pour ce faire, l'objet doit être orienté et placé de manière adéquate par rapport au lecteur optique ou RFID afin de permettre la lecture des informations. Cette opération manuelle d'identification ou de lecture est très consommatrice en temps; de plus le risque d'oublier d'identifier des objets ou de les identifier plusieurs fois et grand, ce qui conduit à des erreurs d'inventaire ou de traçabilité.

Les codes optiques (du type codes-barres, codes datamatrix) sont limités en taille, en raison des limitations de la résolution des lecteurs optiques, et la quantité d'information pouvant être contenue dans le symbole est quant à elle limitée par la surface restreinte disponible sur certains objets. De plus, l'information contenue dans les codes optiques est fixe et ne peut plus être modifiée.

Certains tags RFID toutefois peuvent offrir des mémoires en lecture/écriture et authentifiés comme étant un tag original. Plus précisément, le code d'identification peut être garanti unique et une partie de la mémoire du tag peut être accessible en lecture/écriture: les informations contenues dans cette partie peuvent donc être modifiées et mises à jour. La pérennité de l'information contenue dans le symbole optique n'est pas garantie. En effet, si le symbole optique se dégrade, est sale ou est recouvert, par exemple par un tissu, l'information n'est plus accessible. De plus, les tags RFID du marché garantissent la non volatilité de l'information durant 10 ans au moins.

En revanche, il est possible, pour des instruments dans d'autres matériaux que du métal, de pouvoir lire à distance des tags RFID posés sur ceux-ci. Mais s'ils se trouvent dans un conteneur métallique fermé il n'est alors plus possible de lire à distance et automatiquement ces tags RFID. Cependant, dans le cas de cette lecture RFID à contact ou à quasi-contact, aucun algorithme d'anticollision est utilisé ou est respectivement utilisable car plusieurs tags RFID ne peuvent se trouver dans le champ magnétique créé par l'antenne RFID.

Le brevet US 7,088,249 décrit les effets RFID provenant des fentes dans le métal ou des effets RFID de proximité (induction dans le métal par contact ou a proximité immédiate) Ce brevet ne décrit toutefois pas la possibilité de pouvoir identifier une multitude de tags à l'intérieur d'une boîte métallique fermée.

Les publications WO 2007/090026, WO 2006/063103, WO 2006/026289 et WO 2006/026246, décrivent des systèmes et méthodes d'identification d'objets, notamment des instruments chirurgicaux, au moyen de la technologie RFID.

Le document WO 2007/090026 par exemple montre un panier de transport pour des instruments chirurgicaux qui sont marqués avec des tags RFID. L'un des buts recherchés dans le système décrit est de proposer des tags RFID qui soient capables de résister à la stérilisation, un processus indispensable quand il est question d'instruments utilisés pour la chirurgie. Le panier est de forme rectangulaire et est fabriqué en plastique ou métal et il porte un tag RFID comme les instruments individuels contenus dans le panier ce qui permet la traçabilité de ces objets (panier et instruments).

Le document WO 2006/063103 montre un système et un procédé pour la lecture des tags RFID portés par des instruments de chirurgie. Plus précisément, cette demande décrit d'une part un panier (en plastique ou en métal) portant un tag RFID et contenant lesdits instruments, eux-mêmes aussi marqués avec un tel tag RFID. Selon cette demande, un panier ouvert contenant des instruments est amené sur une table de lecture RFID pour l'identification. Cette table comporte plusieurs antennes RF pour la lecture des tags des objets (panier et instruments) placés sur la table. Les antennes sont utilisées pour générer un signal d'excitation RF qui permet l'émission de l'information contenues dans les tags RFID (comme il est connu dans le principe de fonctionnement de la détection RFID). L'information reçue est analysée, par exemple par des moyens informatiques, et peut être traitée, comparée etc. selon le traitement souhaité (détermination de la localisation d'un objet, validation de sa présence dans le panier, détermination de "l'âge" des instruments etc). Le résultat de cette analyse peut ensuite donner lieu à la transmission d'informations à l'utilisateur ou à un système informatique pour traitement ultérieur. Le système décrit dans cette publication est ouvert dans le sens où ni le panier ni la table ne sont fermés.

Le document WO 2006/026289 décrit un système et procédé pour détecter par RFID des instruments et un panier contenant lesdits instruments. Dans cette publication, le panier est un panier intelligent ou actif, en ce qu'il comprend lui-même des moyens de transmission de l'information concernant les instruments qu'il contient. Ainsi, le panier comprend notamment des antennes et des lecteurs capables de lire les instruments et fonctionne comme un relai pour transmettre l'information à un système externe de lecture.

Le document WO 2006/026246 décrit un système automatique de lecture d'instruments chirurgicaux contenus dans un panier au moyen de techniques RFID. Plus précisément, le système comprend un boîtier avec une antenne interne et un lecteur associé à l'antenne, le panier étant introduit dans le boîtier. Le lecteur du boîtier émet des ondes RF au travers de l'antenne et peut ainsi détecter les instruments du panier, de même que le panier lui-même. Le panier peut être du type décrit dans la demande WO 2006/026289 citée ci-dessus. Comme il peut y avoir plusieurs instruments présents dans le panier, un protocole anticollision est utilisé pour permettre l'acquisition correcte des différents signaux générés.

### PRINCIPE DE L'INVENTION

Un but de l'invention est de proposer un système qui soit capable de détecter la présence d'objets dans une cassette, de préférence métallique et fermée, depuis l'extérieur de la cassette en utilisant la technologie RFID.
Plus spécifiquement, un des buts de l'invention est de proposer un lecteur de type RFID qui permet cette détection d'objets multiples portant un tag RFID.

### DESCRIPTION DE L'INVENTION

De façon générale, un système RFID peut être visualisé comme la combinaison des trois éléments suivants:
❖ Tag RFID ou transpondeur
❖ Lecteur RFID ou transceiver
❖ Les données du sous-système de traitement

Un tag RFID est usuellement composé d'une antenne, d'un capteur sans fil (ou puce électronique ou circuit intégré (IC) ou "chip") et d'un matériau d'enrobage. La puce électronique contient un identifiant et éventuellement des données complémentaires.

Un lecteur RFID comprend généralement une antenne, l'émetteur-récepteur et un décodeur, qui envoie des signaux périodiques pour se renseigner sur tous les transpondeurs à proximité. Sur réception de tout signal d'un tag il transmet ces informations au processeur de données.

Le sous-système de traitement de données fournit les moyens de traitement et de stockage/transmission des données reçues.

Face à l'identification d'objets métalliques opérée dans des milieux pouvant être métalliques tels que les instruments dentaires et médicaux dans des cassettes métalliques fermées, des paniers en treillis de métal, des paniers grillagés ou des paniers de stérilisation, la basse fréquence (124-135 kHz) est préférable pour des raisons de moindre sensibilité à la décalibration des paramètres RFID (detuning) ; ce phénomène est constaté pour la haute fréquence 13.56 MHz tout comme des réflexions et suppressions de signaux incontrôlables sont constatés pour la ultra haute fréquence 433/868/915 MHz, 2.45 et 5.8 GHz.

Les TAGS utilisés dans le cadre de la présente invention sont des tags passifs standards du marché fonctionnant à basse fréquence. L'utilisation de tags actifs est aussi possible.

Un tel tag RFID passif est composé d'une antenne, d'un chip lié à l'antenne et d'un matériau d'encapsulation. Les tags passifs utilisent l'énergie induite par le champ électromagnétique du lecteur RFID.

Les antennes des tags RFID les plus courants peuvent être classifiées en deux types, ceux qui ont une forme de disque qui utilisent une antenne circulaire (air-coil), et ceux qui ont une forme cylindrique et qui utilisent une antenne avec un noyau en ferrite.

L'aspect de ces tags dépend de la forme des différents enroulements d'antenne, c'est-à-dire que l'un apparaît comme disque et l'autre comme une tige
a. De forme cylindrique avec une ferrite.
   L'inductivité est générée par la ferrite
b. De forme circulaire.
   L'inductivité est générée par la surface déterminée à l'intérieur de l'antenne.

Les tags choisis doivent posséder la possibilité de réaliser l'anti-collision. Beaucoup de tags RFID courants du marché possèdent d'ailleurs cette fonctionnalité.

En effet, la lecture de plusieurs instruments équipés de tags RFID dans un champ magnétique requiert l'utilisation d'algorithmes d'anticollision. Sans une méthode d'anticollision, le lecteur pourrait recevoir des signaux venant de plusieurs tags en même temps, ce qui entraînerait une confusion au niveau de la réception des données et rendrait impossible le décodage de l'information. Par conséquent tous les tags RFID ne pourraient être détectés et leur identifiant unique collecté. Le succès de lectures à l'aide d'algorithmes d'anticollision requiert toutefois un champ magnétique relativement homogène, car un signal trop faible ne sera pas pris en compte, en résulte une lecture incomplète de la population de tags présente.

### Algorithmes anti-collision généraux :

Certaines applications sans contact exigent la communication simultanée ou sélective avec des dispositifs RFID. Afin de communiquer un à un avec un dispositif du groupe de dispositifs, le dispositif cible doit être identifié avant de pouvoir être adressé. Par conséquent le lecteur (ou module de lecture/écriture) doit commencer par un appel « qui est là ». Maintenant tous les tags peuvent répondre simultanément avec leur code d'identification. Le processus doit distinguer toutes ces réponses ; la capture correcte de leur code d'identification s'appelle le processus anti-collision. Il existe différentes méthodes anti-collision pour identifier un dispositif dans le groupe de dispositifs. Les algorithmes anti-collision peuvent explorer le domaine spatial, le domaine temporel ou le domaine des fréquences afin d'identifier les multiples tags. Une possibilité basée sur le domaine temporel est d'utiliser des transpondeurs avec des temps de réponses aléatoires. S'il n'y a pas trop de transpondeurs simultanément dans le champ électromagnétique, la probabilité pour identifier un premier dispositif avant qu'un second s'y mêle est élevée.

L'un des principes d'anti-collision est « l'arbre binaire adaptatif » ou « adaptative binary tree » mais avec des fonctionnalités additionnelles pour permettre la détection, par exemple, de 800 tags en 33 secondes.
❖ Codage AC du signal du tag
❖ Fonctionnalité DSP ("digital signal processing unit") du contrôleur du lecteur pour une détection des collisions à chaque bit
❖ Algorithme spécifique pour garantir une détection rapide et fiable de tous les transpondeurs dans le champ.
❖ Démodulateur I/Q, échantillonnage adaptatif.

A titre d'exemple, la demande US 2009/040021 décrit un procédé de détection de tags utilisant la technique mentionnée ci-dessus.

Bien entendu, d'autres algorithmes d'anticollision connus peuvent tout à fait être utilisés dans le cadre de la présente invention, mais affecteraient probablement négativement la vitesse d'exécution.
L'architecture du lecteur RFID (module de lecture/écriture) doit être capable de gérer l'anticollision et de traiter et filtrer des signaux analogiques perturbés.
Différents lecteurs du marché peuvent être utilisés sous condition d'être muni des fonctionnalités suivantes :
-) Codage AC du signal du tag
-) Traitement numérique du signal pour la détection de collision au niveau de chaque bit
-) Algorithme spécifique pour la détection rapide et fiable de tous les tags du champ
-) Démodulateur I/Q avec échantillonnage adaptatif

### Design de l'antenne externe

L'architecture d'antenne préférable qui soit capable de créer un champ homogène même en y logeant des objets métalliques est un" tunnel "car il s'agit d'une antenne tridimensionnelle bobinée autour d'une structure creuse en forme de tiroir ouvert dans lequel l'on peut loger les objets à identifier. On utilise par exemple une antenne de type Helmholtz.

### ❖ Système à une antenne

Dans le cas de tags de forme cylindrique, les tags ne sont de préférence pas positionnés parallèlement à l'antenne. Dans ce cas, la détection des tags n'est pas toujours possible. La position idéale du tag est donc perpendiculaire à l'antenne (dans l'axe du tunnel). Nos mesures ont permis une déviance d'environ +/- 45° par rapport à cette position idéale, voire plus dans certains cas.

Les cassettes utilisées sont des cassettes de stérilisation standard du marché. Ces cassettes peuvent être par exemple, en inox, en plastique, en aluminium, etc.
Les cassettes peuvent également être des plateaux de stérilisation, des paniers perforés ou des paniers grillagés. Dans le marché dentaire et médical, les termes «containers », « conteneurs », « boîtes », « kits », « sets », « trousseauxs » sont également employés.
Des exemples de cassettes de stérilisation sont donnés dans l'état de la technique sur les sites internet des société suivantes:
i) http://www.omb-meditech.com
ii) http://www.wagner-steriset.de
Le design des cassettes a une influence moindre sur la performance (fiabilité) de lecture du système que le matériau. En fermant hermétiquement la cassette avec une bande de cuivre il a été constaté que le champ demeurait homogène à l'intérieur et ne déclinait qu'à environ la moitié de la force de champ aux alentours de cette cassette métallique.
On constate qu'un container entièrement métallique contenant de multiples instruments intégralement métalliques munis chacun d'un tag RFID peuvent être identifiés en totalité sans autre manipulation.
En cas d'un container en aluminium, cette lecture est nettement moins performante, c'est pourquoi on est amené à penser que les matériaux du containeur doivent être très conducteur (équivalent a de l'inox, de l'acier ou du cuivre, par exemple et non limitatif).
Comme la cassette est hermétiquement fermée par de la feuille de cuivre, le champ magnétique doit forcément traverser le métal. Cela créé des courants de Foucault qui diminuent environ de moitié le champ magnétique homogène dans la cassette. Néanmoins, la force et l'homogénéité du champ magnétique dans la cassette sont suffisantes pour identifier, lire et écrire tous les tags RFID.
Certaines cassettes présentent des ouvertures afin de laisser passer la vapeur d'eau lors de la stérilisation en autoclave sous vapeur d'eau, cela permet de stériliser le contenu de la cassette. Afin d'être sûr que le champ magnétique ne se propage pas au travers de ces interstices, nous avons fermé les trous présents au moyen d'un film de cuivre. Cela permet d'être sûr que le champ magnétique traverse bien le métal (dans le cas de cassettes de stérilisation métallique) et qu'il ne s'agit pas d'un simple phénomène de réflexion du champ magnétique.
Le positionnement des tags en hauteur dans la boîte (ou cassette) métallique fermée n'a aucune influence sur les performances, nous sommes donc dans la possibilité de pouvoir identifier tous les tags où qu'ils se trouvent dans la boîte pourvu qu'ils soient bien orientés. En effet, le champ est réduit à l'intérieur de la boîte métallique mais reste suffisant pour fournir l'énergie nécessaire à tous les tags pour les détecter et d'échanger de l'information. Le champ est homogène dans le tunnel (et dans la boîte). Un tag cylindrique (antenne en ferrite) capte les lignes de champs (µR air ∼ 1 ; µR ferrite > 1000).

Il y a moins de detuning du tag en forme de tige (metal rod tag) avec l'antenne ferrite prêt du métal comparé à une antenne en forme de disque (air-coil).

Les tags RFID détectés permettent ainsi de réaliser un inventaire et/ou de suivre (traçer) les objets dans un hôpital, clinique, cabinet dentaire, cabinet médical, stérilisation centralisée, ou groupement d'hôpitaux, de cliniques, de cabinets dentaires ou médicaux ou lors de l'échange (ou prêt ou vente) de matériel entre un fabricant de dispositifs médicaux et ses clients. Les exemples cités ne sont pas limitatifs et sont fournis à titre d'exemple.

En effet, il est très important, voir légalement requis dans les domaines médical et dentaires de s'assurer qu'un instrument ou un lot d'instrument stocké dans une cassette métallique aient été correctement stérilisés avant son utilisation ou réutilisation afin de limiter tout risque d'infection.

Les tags RFID ou transpondeurs peuvent aussi bien identifier le contenu d'une cassette que le conteneur (cassette).

La solution élaborée permet de lire par RFID un code d'identification ou des informations stockées dans la mémoire d'un tag RFID fixé sur le ou les objets (notamment les dispositifs médicaux et dentaires) en métal ou matériaux composites. Cette lecture est réalisée de manière automatique et sans contact avec le ou les objets. Cette lecture est réalisée à travers une boîte métallique fermée selon certaines conditions décrites dans ce brevet. De plus cette lecture multiple de plusieurs tags RFID sur des objets métalliques en mode anti-collision est réalisée à travers une boîte métallique fermée. Cette lecture se fait en quelques secondes et permet de collecter l'identifiant unique de l'IC, de lire les données stockées dans la mémoire de l'IC si celui-ci est en muni, d'écrire ou de remplacer les données de la mémoire du chip. Par exemple, cela permet de saisir l'identité des instruments stérilisés ou à stériliser ou de s'assurer que le contenu d'un contenant est conforme à une liste.

On utilise une architecture de récepteur qui détecte à la fois l'amplitude et la modulation de phase des réponses, ce qui est réalisé par exemple par décalage de phase adaptatif du temps d'échantillonnage de la porteuse (voir démodulateur I/Q).

Les tags RFID sont soit fixés directement sur la surface de l'instrument pour, par exemple, les solutions en rétrofit des instruments existants ou incrustés sur ou dans ceux-ci quand il s'agit d'une "première monte" lors de laquelle le fabricant de l'instrument est a même d'en modifier le design. Dans ces deux cas le système de fixation doit être industrialisable voire automatisable.

La présente invention permet notamment les résultats suivants:
-) Lecture de un jusqu'à une centaine d'instruments muni chacun d'un tag RFID placé sur chaque instrument en composite ou en métal.
-) Lecture des instruments par les antennes posés sur un plateau quelle que soit l'orientation des instruments sur le plateau
-) Lecture automatique de plusieurs instruments en temps réel a une distance de 0-20 cm sur un plateau en matériaux composites ou en métal (par exemple en alu ou inox).
-) Lecture possible aussi dans une cassette complètement fermée en plastique et aluminium
-) Lecture aussi à travers une cassette en inox munies de trous ou de fentes (par exemple cassette à stériliser perforée de trous selon les normes DIN en vigueur sur le passage de la vapeur à travers les cassettes.)
-) Lecture des instruments métalliques dans une boîte ou un plateau à l'intérieur d'une cuve de stérilisateur en inox. L'antenne étant dessinée pour permettre la lecture des tags sur les instruments se trouvant directement dans la cuve du stérilisateur par exemple.

La cassette peut être lue elle-même par son tag RFID fixé par exemple sur ses côtés. Les instruments peuvent être lus dans la cassette fermée se trouvant dans le stérilisateur. La distance entre l'antenne et la ou les cassettes est de plusieurs centimètres et malgré cette distance la lecture des tags sur les instruments et les cassettes est possible automatiquement dès que la cassette ou les instruments se trouvent à proximité de l'antenne.

Le plateau se glisse dans le stérilisateur ou dans le tunnel de lecture externe et tous les tags RFID sur les instruments sont lus automatiquement même à travers les cassettes fermées respectivement muni d'un couvercle. Y compris des cassettes en inox munis de trous (trous prévus pour laisser passer la vapeur d'eau en cas de stérilisation)

La présente invention permet la lecture simultanée de un à une centaine d'instruments munis d'un tag RFID de manière automatique par l'intermédiaire d'une antenne dessinée à cet usage et reliée à un module de lecture/écriture de tags RFID.

Cette invention permet la lecture simultanée de un à plusieurs instruments métalliques ou non dans une cassette métallique fermée ou non.

La lecture de tous les codes uniques d'identification (identifiants), la lecture/écriture des informations sur l'historique de chaque instrument (nombre d'utilisations, de stérilisations, d'interventions de maintenance, type d'intervention, etc.) se fait sans erreur et sans perte sur des instruments (par exemple dentaire ou médicaux) entièrement métalliques.

Ces instruments sont soit de section essentiellement cylindriques (rondes, ovoïdes, hexagonales, etc.) et pleines ou creuses, soit de formes plates (sections rectangulaires, torsadés, aplaties, etc.)

Dans une configuration de tunnel à une antenne les instruments, respectivement les tags RFID appliqués sur ceux-ci doivent être orientés a +/-45 degrés par rapport à l'axe principal du tunnel (axe médian d'ouverture). Dans certains cas optimaux, la lecture reste possible avec une orientation allant au delà de +/- 60 degrés par rapport à l'axe principale du tunnel, voire dans n'importe quelle orientation des instruments.

La lecture d'une centaine d'instruments est possible dans une enceinte fermée en métal (par exemple une cuve de stérilisateur en inox) en intégrant la ou les antennes de lecture de tags RFID dans la cuve de la dite enceinte (par exemple celle d'un stérilisateur)

Le processus de stérilisation dans les établissements hospitaliers ou autres structures est connu. Les antennes de lecture RFID et les tags incorporés dans des stérilisateurs ou machine à laver respectivement dans des couvercles ou portes des ceux-ci résistent à de multiples cycles de stérilisations à 134 degrés C et à la désinfection et au lavage avec des détergents puissants. Le code unique intégré au tag d'identification est par conséquent toujours lisible à 100% après de nombreux cycles de ces types de traitement.

La lecture de dizaines d'instruments métalliques est aussi possible à travers une cassette fermée en métal (par exemple cassette perforée en inox pour la stérilisation d'instruments dentaires ou médicaux) et cette lecture est possible à une distance de plusieurs centimètres des antennes.

L'invention et ses modes d'exécution seront mieux compris par la description des figures annexées à la présente demande dans lesquelles:
La figure 1 illustre de façon schématique un lecteur selon la présente invention;
La figure 2 illustre de façon schématique les lignes de champ dans le tunnel;
La figure 3 illustre la densité du flux dans le tunnel;
La figure 4 illustre le tunnel en lui-même;
La figure 5 illustre le capot qui vient autour du tunnel.

### DESCRIPTION DETAILLEE

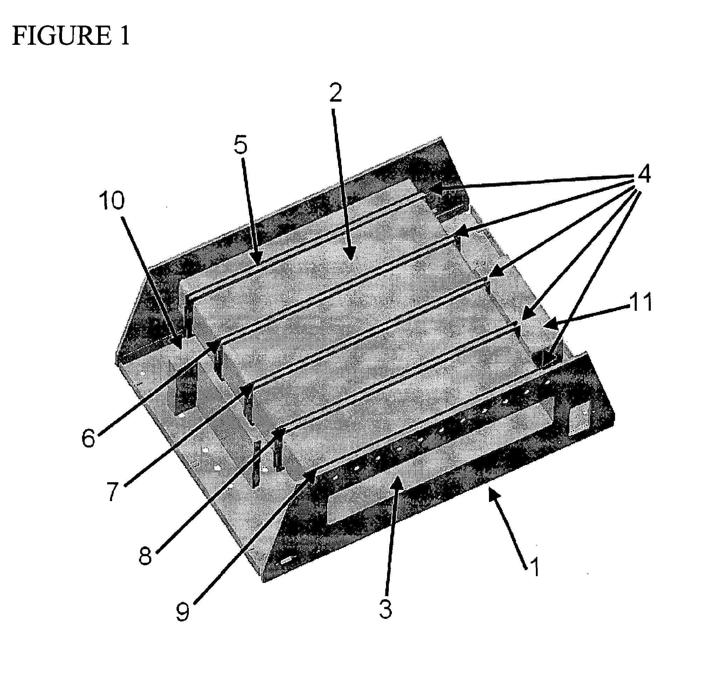

La figure 1 illustre de façon schématique l'appareil de lecture 1 selon l'invention. Cet appareil 1 comprend un corps 2 (fabriqué par exemple en matière synthétique ou naturelle pouvant comporter des pièces métalliques) ledit corps 2 ayant une ouverture formant un tunnel 3. Ce tunnel 3 peut par exemple avoir une forme rectangulaire et est destiné à recevoir les cassettes (non représentées) qui contiennent les objets à détecter en utilisant la technologie RFID comme décrite ci-dessus. A cet effet, le corps 2 de l'appareil est entouré par une antenne 4 qui comprend plusieurs enroulements ou bobinages 5 à 9 comme illustré dans la figure 1. Plus spécifiquement, ces bobinages 5 à 9 sont répartis le long du corps 2 de façon régulière.

Chaque bobinage est formé par un certain nombre de spires de fil, par exemple un fil de cuivre. Spécifiquement, l'antenne est formée d'un fil continu, par exemple de cuivre, qui est utilisé pour former les bobinages successifs tels qu'illustrés dans la figure 1.

A titre d'exemple de réalisation, on peut avoir cinq bobinages 5 à 9 répartis le long du corps 2, les deux bobinages externes 5 et 9 comportant jusqu'à environ 25 spires et les trois bobinages internes 6-8 comprenant le même nombre ou moins de spires. On peut bien entendu utiliser moins de bobinages (par exemple trois) ou plus que cinq.

Dans cet exemple illustratif, le tunnel a une longueur inférieur à 500 mm et les bobinages sont disposés à espacés pratiquement égales les uns des autres, les deux bobinages externes 5 et 9 étant éloignés du bord du tunnel de quelques centimètres. Le fil du cuivre a un diamètre inférieur à 1 mm.

Bien entendu, ces valeurs sont illustratives d'un mode d'exécution et ne doivent pas être considérées comme limitatives. D'autres configurations (par exemple nombre de bobinages, emplacement et orientations en biais des bobinages etc.) et dimensions (par exemple nombre de spires, diamètre du fil etc.) sont tout à fait possibles et peuvent être déterminées et sélectionnées en fonction des circonstances.

L'appareil comprend également un lecteur RFID 10 fonctionnant selon les principes exposés ci-dessus.

L'appareil comprend également des connexions (RS232, USB, ethernet, sans fil,...) afin de pouvoir recevoir et transmettre les données au sous-système de traitement.

Dans la méthode selon l'invention, une cassette fermée (ou non) est introduite dans le tunnel 3 et l'antenne 4 permet la détection des objets portant un tag (y compris la cassette) selon les principes de la RFID exposés ci-dessus. La détection de plusieurs objets est bien entendu possible grâce à l'utilisation d'algorithmes d'anti-collision.

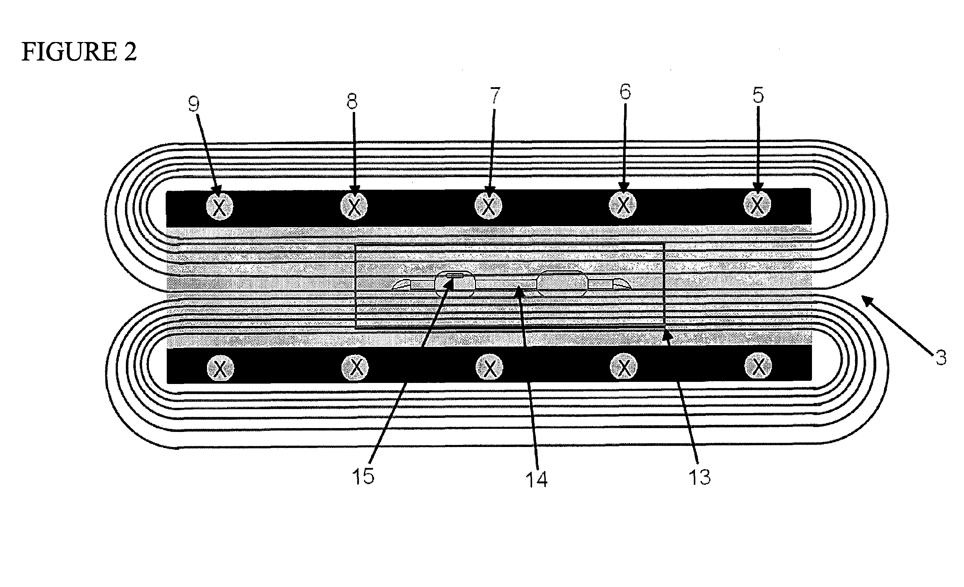

Dans la figure 2, on a illustré de façon schématique les lignes de champ dans le tunnel 3 lors de la détection. Plus particulièrement dans cette figure, on a représenté le tunnel 3 autour duquel se trouvent les bobinages 5 à 9 de l'antenne. Cette configuration peut correspondre à celle de la figure 1 mais d'autres configurations sont bien sûr possibles, comme indiqué avec un nombre différent de bobinages.

Dans le tunnel 3, on a introduit une cassette fermée 13 qui contient des objets 14, par exemple (mais de façon non-limitative) des instruments médicaux. Chaque objet 14 (et aussi éventuellement la cassette 13) porte un tag RFID 15 qui permet sa détection individuelle selon les principes de la RFID.

La référence 16 identifie les lignes de champ qui sont générées dans le tunnel 3 lors de la détection pour l'activation des tags 15 des objets.

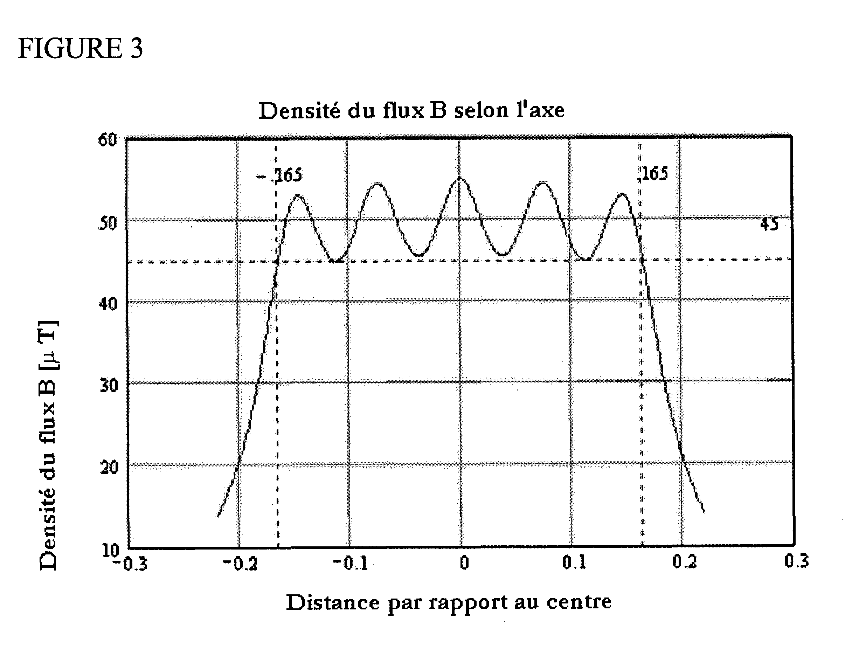

La figure 3 illustre la densité de flux en fonction de la distance dans le tunnel de façon schématique selon l'axe du tunnel. Les valeurs indiquées sont bien entendu données à titre d'exemple et ne doivent pas être considérées de façon limitative.

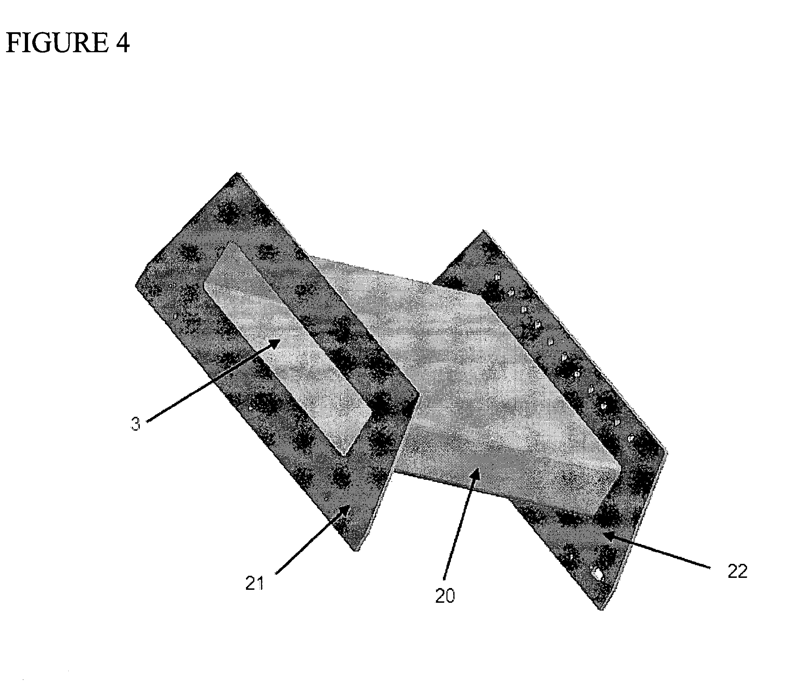

La figure 4 représente une vue en perspective de la structure du tunnel 3 qui ne doit pas être en métal (par exemple en plastique). Cette structure comprend notamment une partie centrale 20 formant le tunnel autour de laquelle l'antenne sera montée (voir figure 1) et deux parois latérales 21, 22.

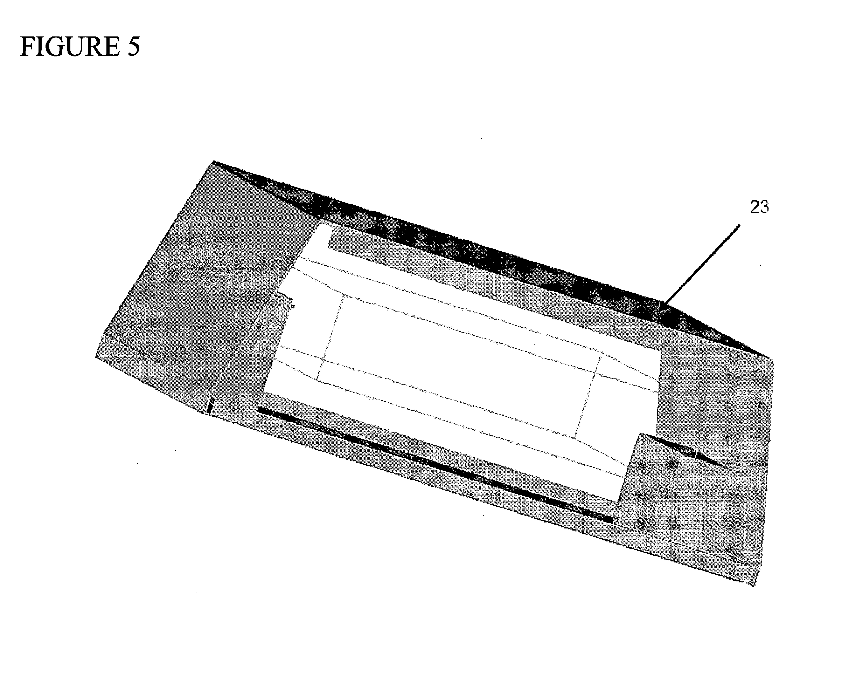

La figure 5 illustre de façon schématique des pièces du tunnel qui sont en inox (par exemple ou en un équivalent) et qui constituent le capot 23 du tunnel.

Bien entendu, les exemples indiqués ci-dessus le sont à titre illustratif et ne doivent pas être considérés comme limitatifs. Par exemple, comme indiqué ci-dessus, les cassettes sont de préférence métalliques et fermées. Elles peuvent également dans des variantes être ouvertes et/ou non métalliques, voire partiellement métalliques, le tunnel selon l'invention permettant la détection dans ces différentes configurations.

De même, le principe du tunnel selon la présente invention peut s'utiliser seul (comme illustré dans la figure 1) ou alors il peut s'intégrer dans un autre système, par exemple un stérilisateur comme indiqué plus haut. Dans ce contexte, le système permet d'identifier directement les objets qui sont soumis à la stérilisation. D'autres applications sont bien entendu envisageables pour l'utilisation du principe de l'invention et dans d'autres contextes que la stérilisation: toute utilisation dans le cadre de l'identification et/ou la traçabilité d'objets peut faire appel au principe de l'invention.

## Revendications

1. Appareil de lecture (1) pour objets (14) portant chacun au moins un tag RFID (15), lesdits objets étant placés dans une cassette (13), ledit appareil (1) comprenant au moins un élément en forme de tunnel (3) dans lequel ladite cassette est placée, ledit élément comportant au moins une antenne (4) et un lecteur RFID (10), charactérisé en ce que ladite antenne (4) comprend au moins trois bobinages (5-9) constitués par un fil continu, chacun bobinage comprenant plusieurs spires, lesdits bobinages (5-9) étant repartis le long et autour dudit tunnel (3), les spires desdits bobinages (5-9) étant approximativement perpendiculaires à l'axe principal du tunnel (3)et lesdits bobinages étant écartés l'un de l'autre et parallèles l'un à l'autre.

2. Appareil selon la revendication 1 qui lit un ou plusieurs tags de basse fréquence fonctionnant à des fréquences entre 124 et 135 kHz, ledits tags étant en forme de tige et ayant un protocole anti-collision et étant fixés sur ou incorporés dans des objets en matières métalliques et/ou synthétiques, l'axe longitudinal desdits tags en forme de tige étant disposé dans une direction entre +45° et - 45° par rapport à l'axe principale du tunnel (3).

3. Appareil selon l'une des revendications précédentes, dans lequel au moins un bobinage interne (6, 7, 8) est amenagé entre deux bobinages externes (5, 9).

4. Appareil selon la revendication 3, dans lequel chacun des bobinages externes (5, 9) comprend au moins 25 spires.

5. Appareil selon l'une des revendications 3 ou 4, dans lequel le (les) bobinage(s) interne(s) (6, 7, 8) comprend/comprennent autant ou moins de spires que les bobinages externes (5, 9).

6. Appareil selon l'une des revendications précédentes, dans lequel le fil formant l'antenne (4) est un fil de cuivre avec un diamètre inférieur à 1 mm.

7. Appareil selon l'une des revendications précédentes, dans lequel les bobinages (5-9) sont répartis le long du corps (2) de l'appareil de lecture (1) de façon régulière.

8. Système de lecture RFID comprenant au moins un appareil (1) selon l'une des revendications précédentes et au moins une cassette (13) pouvant contenir des objets (14) munis d'un tag RFID.

9. Système selon la revendication 8, dans lequel ladite au moins une cassette (13) est fermée.

10. Système selon l'une des revendications 8 ou 9, dans lequel ladite au moins une cassette est une cassette métallique.

11. Système selon l'une des revendications 8 à 10, dans lequel ladite au moins une cassette est munie d'un tag RFID.

## Patentansprüche

1. Vorrichtung (1) zum Auslesen von Gegenständen (14), die zumindest einen RFID Tag (15) tragen, wobei die besagten Gegenstände in einer Kassette (13) platziert sind, wobei die genannte Vorrichtung (1) zumindest ein tunnelförmiges Element umfasst, in welchem die Kassette platziert ist, wobei besagtes Element zumindest eine Antenne (4) und einen RFID Leser (10) umfasst, **dadurch gekennzeichnet, dass** die besagte Antenne (4) zumindest drei durch einen ununterbrochenen Draht gebildete Spulen (5-9) umfasst, wobei jede Spule mehrere Wicklungen umfasst, wobei besagte Spulen (5-9) entlang und um den Tunnel (3) herum verteilt sind, wobei die Wicklungen der Spulen (5-9) ungefähr rechtwinkelig zur Tunnel- (3) Hauptachse sind und die Spulen voneinander beabstandet und parallel zueinander sind.

2. Vorrichtung gemäß Anspruch 1, welche eine oder mehrere Niederfrequenz-Tags, die in einem Frequenzbereich zwischen 124 und 135 kHz betrieben werden, ausliest, welche Tags stabförmig sind und ein Antikollisionsprotokoll aufweisen und welche an Gegenständen aus Metall und/oder synthetischen Materialien angebracht oder darin integriert sind, wobei besagte stabförmige Tags mit ihrer Längsachse in einer Richtung innerhalb eines Bereichs von +/- 45° in Bezug auf die Hauptachse des Tunnels (3) angeordnet sind.

3. Vorrichtung gemäß einem der vorherigen Ansprüche, wobei zumindest eine innere Spule (6, 7, 8) zwischen zwei äußeren Spulen (5, 9) angeordnet ist.

4. Vorrichtung gemäß Anspruch 3, wobei die äußeren Spulen (5, 9) jeweils zumindest 25 Wicklungen umfassen.

5. Vorrichtung gemäß Anspruch 3 oder 4, wobei die innere(n) Spule(n) (6, 7, 8) gleich viele oder weniger Wicklungen als die äußeren Spulen (5, 9) umfasst/ umfassen.

6. Vorrichtung gemäß einem der vorherigen Ansprüche, wobei der die Antenne (4) bildende Draht ein Kupferdraht mit einem Durchmesser von weniger als 1mm ist.

7. Vorrichtung gemäß einem der vorherigen Ansprüche, wobei die Spulen (5-9) in regelmäßigen Abständen entlang des Körpers (2) der Auslesevorrichtung (1) verteilt sind.

8. RFID Lesesystem, umfassend zumindest eine Vorrichtung (1) gemäß einem der vorherigen Ansprüche und zumindest eine Kassette (13), welche RFID markierte Gegenstände (14) enthalten kann.

9. System gemäß Anspruch 8, wobei die zumindest eine Kassette (13) geschlossen ist.

10. System gemäß Anspruch 8 oder 9, wobei die zumindest eine Kassette eine Metallkassette ist.

11. System gemäß einem der Ansprüche 8 bis 10, wobei die zumindest eine Kassette mit einem RFID-Tag markiert ist.

## Claims

1. A reading apparatus (1) for objects (14) with at least one RFID tag (15), said objects being placed in a cassette (13), said apparatus (1) comprising at least one tunnel-shaped element (3) into which said cassette is placed, said element comprising at least one antenna (4) and an RFID reader (10), **characterized in that** said antenna (4) comprises at least three coils (5-9) formed by a continuous wire, each coil comprising several windings, said coils (5-9) being distributed along and around said tunnel (3), wherein the windings of the coils (5-9) are perpendicular to the tunnel's (3) main axis and the coils are spaced apart from each other and are parallel to each other.

2. The apparatus according to claim 1 which reads one or several low-frequency tags operating at a frequency range of between 124 and 135 kHz, which tags are rod-shaped and have an anti-collision protocol and which are attached to or incorporated into objects consisting of metal and/or synthetic materials, said rod-shaped tags being disposed with their longitudinal axis in a direction within a range of +/- 45° in relation to the main axis of the tunnel (3).

3. The apparatus according to any one of the preceding claims, wherein at least one inner coil (6, 7, 8) is arranged between two outer coils (5, 9).

4. The apparatus according to claim 3, wherein the outer coils (5, 9) each comprise at least 25 windings.

5. The apparatus according to claim 3 or 4, wherein the inner coil(s) (6, 7, 8) comprise(s) as many windings as the outer coils (5, 9) or fewer windings than the outer coils (5, 9).

6. The apparatus according to any one of the preceding claims, wherein the wire forming the antenna (4) is a copper wire having a diameter of less than 1 mm.

7. The apparatus according to any one of the preceding claims, wherein the coils (5-9) are distributed at regular intervals along the body (2) of the reading apparatus (1).

8. An RFID reading system comprising at least one apparatus (1) according to any one of the preceding claims and at least one cassette (13) which may contain RFID-tagged objects (14).

9. The system according to claim 8, wherein the at least one cassette (13) is closed.

10. The system according to claim 8 or 9, wherein the at least one cassette is a metal cassette.

11. The system according to any of claims 8 to 10, wherein the at least one cassette is RFID tagged.
